(19) **Europäisches Patentamt**

**European Patent Office**

**Office européen des brevets**

(11) **EP 1 335 880 B1**

(12) **FASCICULE DE BREVET EUROPEEN**

(45) Date de publication et mention
de la délivrance du brevet:
**10.05.2006 Bulletin 2006/19**

(51) Int Cl.:
*C01G 56/00* [(2006.01)]   *G21C 3/62* [(2006.01)]
*C07F 5/00* [(2006.01)]

(21) Numéro de dépôt: **01976358.0**

(22) Date de dépôt: **04.10.2001**

(86) Numéro de dépôt international:
**PCT/FR2001/003056**

(87) Numéro de publication internationale:
**WO 2002/028778 (11.04.2002 Gazette 2002/15)**

(54) **PROCEDE DE COPRECIPITATION D'ACTINIDES ET PROCEDE DE PREPARATION D'OXYDES MIXTES D'ACTINIDES**

VERFAHREN ZUR KOFÄLLUNG VON VERBINDUNGEN DER ACTINOID-ELEMENTE UND EIN
VERFAHREN ZUR HERSTELLUNG GEMISCHTER OXIDE DER ACTINOID-ELEMENTE

METHOD FOR CO-PRECIPITATING ACTINIDES AND METHOD FOR PREPARING MIXED
ACTINIDE OXIDES

(84) Etats contractants désignés:
**BE DE GB**

(30) Priorité: **05.10.2000 FR 0012727**

(43) Date de publication de la demande:
**20.08.2003 Bulletin 2003/34**

(73) Titulaires:
• **COMMISSARIAT A L'ENERGIE ATOMIQUE**
**75752 Paris Cédex 15 (FR)**
• **COMPAGNIE GENERALE DES MATIERES**
**NUCLEAIRES**
**78140 Velizy Villacoublay (FR)**

(72) Inventeurs:
• **MESMIN, Claire**
**F-81450 LE GARRIC (FR)**
• **HANSSENS, Alain**
**F-30330 TRESQUES (FR)**
• **BLANC, Pierre**
**F-30133 LES ANGLES (FR)**
• **MADIC, Charles**
**F-94320 THIAIS (FR)**
• **DEBREUILLE, Marie-Françoise**
**F-91460 MARCOUSSIS (FR)**

(74) Mandataire: **Poulin, Gérard**
**Société BREVATOME**
**3, rue du Docteur Lancereaux**
**75008 Paris (FR)**

(56) Documents cités:
**EP-A- 0 251 399       WO-A-97/25721**
**GB-A- 978 615        US-A- 4 131 527**
**US-A- 4 839 149**

• **MICHAEL K.M. ET AL: "Recovery of Plutonium**
**from oxalate supernatant by coprecipitation**
**using uranous nitrate" BARC/1996/E/016,**
**XP002165996 cité dans la demande**
• **BANUSHALI R.D.: "Removal of plutonium and**
**americium from oxalate supernatants by co-**
**precipitation with thorium oxalate" JOURNAL OF**
**RADIOANALYTICAL AND NUCLEAR**
**CHEMISTRY, vol. 240, no. 3, 1999, pages 977-979,**
**XP000990788 cité dans la demande**
• **KELLER C. ET AL.: "Über Karbonatokomplexe**
**des dreiwertigen Americiums sowie desdes vier-**
**und sechswertigen Urans und Plutoniums"**
**RADIOCHIMICA ACTA, vol. 11, no. 3-4, 1969,**
**pages 123-127, XP000990735 cité dans la**
**demande**

**EP 1 335 880 B1**

## Description

La présente invention concerne un procédé de coprécipitation d'actinides à l'état d'oxydation (IV).

L'invention concerne, en outre, un procédé de préparation d'oxydes mixtes d'actinides.

Le domaine technique de l'invention peut, de manière: générale, être défini comme celui de la préparation d'oxydes mixtes d'actinides, en particulier de l'oxyde mixte d'uranium et de plutonium $(U,Pu)O_2$. L'invention s'intéresse, plus précisément, à la fabrication de tels oxydes mixtes par coprécipitation, puis calcination.

En effet, on sait que le plutonium, mélangé le plus souvent à de l'uranium, constitue une matière énergétique qui peut être valorisée, soit dans les réacteurs de type « eau légère », soit dans les réacteurs de nouvelle génération (tels que les réacteurs à neutrons rapides, ou autres). Une telle stratégie présente un certain nombre d'avantages. Elle permet notamment une économie de matières fissiles et constitue un moyen de ralentir la croissance non désirée du stock de plutonium. Le recyclage du plutonium dans les réacteurs à eau pressurisée (REP) est ainsi devenu une réalité industrielle qui se traduit d'année en année par le fait qu'une part croissante du parc de réacteurs de puissance est chargée au moyen d'assemblages mettant en oeuvre un oxyde mixte d'uranium et de plutonium, appelé MOX $(UO_2\text{-}PuO_2)$.

L'extension de l'utilisation du combustible MOX nécessite à la fois la maîtrise de la qualité et de la fiabilité de la fabrication et l'amélioration permanente des performances de ce combustible en réacteur.

Actuellement, les poudres entrant dans la fabrication du MOX sont préparées par mélange mécanique des oxydes $UO_2$ et $PuO_2$. Le mélange obtenu permet, après pressage, frittage et rectification, de produire des pastilles de combustible MOX satisfaisant aux spécifications actuelles.

Le procédé industriel le plus éprouvé, connu sous le nom de procédé MIMAS, comporte deux étapes principales dans la préparation des poudres : un cobroyage des poudres d'oxyde d'uranium et de plutonium pour fabriquer un premier mélange, appelé mélange-mère, qui se caractérise par une teneur en plutonium de 25 à 30 %, puis une dilution à sec de ce mélange-mère dans l'oxyde d'uranium, jusqu'à la teneur finale en plutonium souhaitée.

Pour la fabrication des combustibles, les poudres utilisées doivent répondre à des caractéristiques précises. Elles doivent avoir notamment une bonne aptitude à l'écoulement, de bonnes caractéristiques de compressibilité et une aptitude à la densification par frittage. Un critère important de qualité dans les propriétés finales du matériau fritté est l'homogénéité de répartition du plutonium.

Une bonne homogénéité, dans chaque pastille frittée, est, d'une part, tout à fait favorable pour le comportement du MOX en réacteur, notamment dans une perspective d'accroissement des taux de combustion, et facilite, d'autre part, la complète dissolution du combustible irradié lors des opérations de retraitement.

La co-conversion, par l'intermédiaire de la précipitation ou de la dénitration de l'uranium et du plutonium en solution, est une voie qui permet d'aboutir également après calcination à un oxyde $(U,Pu)O_2$.

Le procédé de co-conversion présente, par rapport au procédé de mélange mécanique précédent, un certain nombre d'avantages potentiels :

- l'obtention a priori plus facile au sein de chaque pastille d'une très bonne homogénéité dans la répartition des éléments U et Pu ;
- la diminution du nombre d'étapes, et la simplification de la technologie mise en oeuvre dans la fabrication du combustible MOX avec la suppression envisageable des postes de broyage et d'homogénéisation mécanique ;
- diminution de la quantité de rebuts et de déchets de procédé ;
- la diminution de l'accessibilité au plutonium, et donc des risques de prolifération lors de la phase d'entreposage préalable des matières nucléaires.

Parmi les procédés de co-conversion en oxydes, des actinides, on peut distinguer schématiquement deux grandes familles : les procédés par précipitation et les procédés par dénitration thermique.

Les seconds, qui ne concernent pas directement le domaine de l'invention, permettent d'obtenir, par évaporation et calcination directe des solutions nitriques, des co-oxydes. Ces procédés de dénitration, bien que simples dans leur concept, fournissent en général des produits de qualité relativement médiocre, qui nécessitent assez fréquemment l'emploi d'additifs et/ou de traitements mécaniques ou thermiques supplémentaires en aval.

Les procédés par précipitation, ou plus précisément par co-précipitation, font intervenir la préparation intermédiaire d'un sel insoluble, qui est ensuite séparé et calciné, pour obtenir l'oxyde désiré. Ces procédés génèrent habituellement, après calcination, des oxydes de meilleure qualité, qui permettent la fabrication de pastilles frittées avec un nombre limité d'étapes de mise en forme. Ils permettent d'accéder, contrairement aux procédés de dénitration thermique, à un facteur de décontamination supplémentaire de l'uranium et du plutonium. Ce facteur est plus ou moins élevé selon le réactif précipitant et les conditions de sa mise en oeuvre.

Pour qu'un procédé de co-précipitation soit réalisable, en conservant un fort intérêt, un certain nombre d'exigences doivent être satisfaites :

- il doit exister des conditions assurant une solubilité comparable et suffisamment élevée des éléments mélangés en solution avant précipitation ;
- il doit exister des conditions assurant une solubilité comparable et suffisamment faible des éléments lors de la précipitation ;
- la cinétique de précipitation de ces éléments doit être sensiblement identique ;
- les sels insolubles utilisés ne doivent être ni trop stables, ni trop instables pour que l'étape de calcination soit réalisable facilement et de façon sûre ;
- la gestion des sous-produits ne doit pas présenter de difficultés insurmontables.

Dans l'ensemble des procédés de co-précipitation, on distingue habituellement, dans le cas des actinides, en particulier de l'uranium et du plutonium, deux familles : celle où les deux éléments sont dans des états d'oxydation distincts et celle où ils sont au même état d'oxydation.

En ce qui concerne les procédés dans lesquels les actinides, tels que U et Pu, sont à des états redox différents, la forme la plus courante rencontrée dans le retraitement correspond au couple U(VI)-Pu(IV) que l'on obtient facilement en solution nitrique. Le mélange U(IV)-Pu(III) est également accessible en solution, en garantissant le maintien de conditions réductrices.

Les procédés de co-précipitation, basés sur ces couples d'U et Pu en solution, mettent en jeu des ions actinide n'ayant pas la même structure. Par conséquent, les précipités obtenus ne correspondent pas à une co-cristallisation parfaite de l'uranium et du plutonium. En conséquence, l'homogénéité de répartition du plutonium est limitée intrinsèquement. On peut citer, par exemple, le procédé de « synprécipitation U(VI)-Pu(IV) » en milieu ammoniacal, dans lequel se forment un hydroxyde de plutonium et le diuranate d'ammonium, qui fournissent des poudres d'oxydes non homogènes, nécessitant des traitements mécaniques pénalisants.

De plus, les phénomènes de précipitation non simultanés et les différences de solubilité, observées dans ces conditions, constituent des défauts inhérents à l'ensemble de ces procédés. On peut citer, en exemple, le cas de la précipitation oxalique où l'on observe :

- une différence significative de solubilité entre l'oxalate d'uranyle (U(VI)) et l'oxalate de plutonium (IV) ;
- un décalage des domaines de précipitation respectifs des oxalates de plutonium (III) et d'uranium (IV).

Par ailleurs, la solubilité de ces sels d'uranium et de plutonium n'est pas influencée de manière identique par les paramètres du procédé, tels que l'acidité et autres.

En ce qui concerne les procédés, dans lesquels les actinides, tels que U et Pu, sont aux mêmes états redox, il s'avère que, dans le sel insoluble que l'on veut obtenir, l'identité de structure des deux ions métalliques autorise une véritable co-cristallisation de l'uranium et du plutonium, ce qui doit permettre d'aboutir, dès l'étape de calcination de ce sel, à une solution solide préformée. L'obtention d'oxydes mixtes homogènes est donc, dans ces conditions, grandement facilitée.

L'état d'oxydation commun des actinides, tels que U et Pu, peut être l'état VI, le précipitant usuel est alors l'ammoniac associée ou non aux ions carbonate.

Cette voie a été plus particulièrement développée dans le procédé, dit procédé AUPuC, qui permet, à partir du carbonate double d'ammonium, d'obtenir des oxydes mixtes $(U,Pu)O_2$ de qualité.

Une autre possibilité passe par la précipitation du carbonate mixte d'uranyle et de plutonyle, qui peut fournir également des produits de qualité intéressante. Bien que l'analogue pour le plutonium du diuranate d'ammonium ne soit pas connu, il est également possible d'obtenir une véritable co-précipitation ammoniacale U,Pu par substitution d'une partie d'U(VI) par Pu(VI).

Les inconvénients principaux de ces procédés sont la génération d'effluents à la fois volumineux et gênants et la filtration souvent difficile, ainsi que les difficultés d'un ajustage valentiel en plutonium (VI).

Il existe, par ailleurs, des procédés mettant en jeu l'oxalate double d'ammonium et d'uranium-plutonium qui constitue une voie d'accès à l'oxyde mixte U-Pu dans le rapport 1/1. Les difficultés liées au manque de stabilité et à la solubilité relativement élevée des oxalates d'actinides (VI) ne facilitent pas le développement de ce type de procédé.

L'état d'oxydation commun des actinides, tels que U et Pu, peut aussi être l'état IV.

Une première difficulté, qui s'avère généralement peu embarrassante, est alors liée au nécessaire maintien de conductions réductrices pour conserver l'état d'oxydation réduit (IV) de l'uranium, malgré la présence d'oxydants, tels que l'oxygène de l'air, l'acide nitrique et l'acide nitreux, le plus souvent. L'utilisation de composés anti-nitreux, telle l'hydrazine, constitue le moyen usuel permettant la stabilisation de l'U(IV) sans en gêner la précipitation.

La difficulté principale réside dans la coexistence nécessaire au sein de la solution aqueuse, avant précipitation, des ions actinide à l'état d'oxydation IV. En effet, ceux-ci, sous leur forme aqua, réagissent entre eux, selon la réaction (1) suivante :

$$U\ IV\ +\ Pu\ IV\ \rightarrow\ U\ VI\ +\ Pu\ III \qquad (1)$$

Cette réaction est spontanée en solution et constitue un obstacle rédhibitoire à la coprécipitation des actinides à l'état d'oxydation IV.

Il est possible d'éviter cette réaction en ajoutant dans la solution des complexants très puissants, tout en étant suffisamment sélectifs, des actinides IV.

De cette manière, en déplaçant fortement les potentiels normaux des couples redox correspondants, on parvient à obtenir le croisement de ces potentiels normaux.

Dans le cas de l'U et du Pu, les phosphates ou les complexants de type hétéropolyanion lacunaire comme le phosphotungstate $P_2W_{17}O_{61}{}^{10-}$ répondent à cet objectif de stabilisation conjointe de U (IV) et Pu (IV) basée sur le concept thermodynamique des potentiels redox. Cependant, ces complexants ne satisfont pas au concept, dit « CHON », et conduisent donc à une pollution des produits finis par les éléments minéraux présents dans ces complexants.

Ils ne peuvent donc être utilisés dans le domaine du nucléaire, en particulier, pour la fabrication de combustibles de type MOX.

On verra plus loin que dans un cas particulier de l'invention, qu'il est possible d'obtenir dans les conditions idoines, le même phénomène de complexation sélective induisant un croisement de potentiels redox, mais de manière surprenante, en utilisant des complexants CHON, donc éliminés ensuite lors de l'étape de calcination.

Parmi les documents illustrant la coprécipitation des actinides, on peut mentionner les documents suivants :

Le document de KM. MICHAEL ; PS. DHAMI « Recovery of plutonium from oxalate supernatant by coprecipitation using uranous nitrate » BARC/1996/E : 016 (1996) décrit la récupération par coprécipitation du plutonium, contenu dans les eaux-mères oxaliques issues de sa conversion, par addition de nitrate uraneux auxdites eaux-mères.

Le but poursuivi dans ce document, est fondamentalement de diminuer les pertes de plutonium dans les eaux-mères de précipitation, en provoquant une seconde précipitation du plutonium, et non de fabriquer par une seule co-précipitation des composés aptes à fournir par calcination un oxyde mixte, tel que $(U,Pu)O_2$, parfaitement homogène.

De même, le document de RD. BANUSHALI ; IC. PIUS ; SK. MUJERKEE ; VN. VAIDYA « Removal of plutonium and americium from oxalate supernatants by co precipitation with thorium oxalate », Journal of radioanalytical and nuclear chemistry 240 ; (3) 977 - 979 (1999) est-il relatif à la récupération conjointe du plutonium et de l'américium dans des effluents (« supernatants ») d'oxalates par addition à ces effluents d'oxalate de thorium, puis coprécipitation.

Le but poursuivi dans ce document est similaire à celui du document précédent. Il s'agit de réduire les pertes en plutonium et en américium dans les eaux-mères oxaliques de précipitation du Pu et de l'Am, tout en assurant le confinement de ces deux radioéléments dans une matrice solide.

Le document de C. KELLER ; D. FANG « Uber Karbonatokomplexe des dreiwertigen Americiums sowie des vier und sechs wertigen Urans und Plutoniums », Radiochimica Acta 11,3-4, pp. 123 - 127 (1969), traite d'un mode d'obtention d'un précipité homogène $(U,Pu)O_2$. L'uranium et le plutonium, initialement à l'état VI, sont réduits conjointement à l'état d'oxydation IV par une électrolyse en milieu alcalin, en présence de carbonate.

Les complexes carbonatés obtenus sont ensuite précipités et décomposés en oxyde par chauffage sous vide. Les inconvénients principaux liés à ce procédé sont la nécessité d'opérer en milieu alcalin et la complexité de l'opération de calcination.

Le document EP-A-0 251 399 est relatif à la précipitation préférentielle du plutonium à partir d'une phase organique, par exemple de TBP, diluée, chargée en plutonium et en uranium, par addition d'un mélange aqueux d'acide oxalique et d'acide nitrique. L'oxalate de plutonium précipité est séché et transformé par chauffage en oxyde de plutonium.

Dans ce procédé, l'uranium, qui accompagne très partiellement le plutonium dans le composé final formé, se trouve, dans la phase organique, à l'état d'oxydation VI, tandis que le plutonium est à l'état d'oxydation IV. Ce composé final ne présente pas les qualités optimales voulues pour l'obtention d'oxydes mixtes parfaitement homogènes.

Le document WO-A-97/25721 est relatif à la précipitation conjointe de l'uranium et du plutonium, afin de les séparer de l'ensemble des éléments présents dans une solution de combustibles irradiés. Le procédé met en jeu les acides carboxyliques ou polycarboxyliques, afin de précipiter l'uranium à l'état d'oxydation VI et le plutonium à l'état d'oxydation IV. Ce procédé se caractérise par l'absence de tout objectif d'homogénéité dans le précipité formé. La différence d'état d'oxydation U,Pu se traduit par un phénomène de ségrégation, noté dans le document, et qui conduit à une précipitation préférentielle du plutonium, tandis que l'uranium reste pour une part non négligeable en solution.

Le document de Atlas, « J. Nucl. Materials », 249(97) 46-51, concerne un procédé de coprécipitation oxalique de U et Th. Il s'agit là d'un cas extrêmement particulier car l'existence d'un seul état d'oxydation stable (IV) du thorium en solution conduit à l'absence de toute possibilité de réaction redox avec U (IV), et donc le problème posé par la réaction (1) ci-dessus, ne se pose pas dans le cas du thorium. Le procédé développé, dans ce document, s'avère donc intéressant pour la fabrication de combustibles de la filière thorium (U,Th), mais n'est absolument pas applicable, tel quel à la production d'autres co-oxydes, tels que les co-oxydes U,Pu, homogènes pour le combustible MOX, puisqu'il ne garantit pas le maintien de l'état d'oxydation IV lors de la précipitation.

En d'autres termes, le procédé, décrit dans ce document, a pour seul objectif la préparation par co-précipitation de co-oxydes (U, Th). Il ne peut être appliqué à la préparation par co-précipitation de solutions solides (U,Pu) $O_2$ parfaites pour la fabrication de combustibles, tels que le combustible MOX.

Il existe donc un besoin non encore satisfait pour un procédé permettant de coprécipiter des actinides se trouvant en solution à l'état d'oxydation (IV), en particulier en milieu acide.

Il existe, en particulier, un besoin pour un procédé, dans lequel, afin de conserver l'état d'oxydation (IV) des actinides en solution, et d'obtenir la coprécipitation de ces éléments effectivement à l'état d'oxydation (IV), on annihile la réaction redox mutuelle des actinides en solution.

En d'autres termes, il existe un besoin pour un procédé, dans lequel les actinides sont maintenus en solution à un même état d'oxydation IV, de manière à les engager ensuite par coprécipitation dans des composés totalement homologues qui permettront, après calcination, d'obtenir des oxydes mixtes homogènes s'approchant d'une solution solide parfaite et ne comportant pas d'impuretés minérales.

Le but de la présente invention est de fournir un procédé de coprécipitation (ou de précipitation simultanée) d'actinides à l'état d'oxydation (IV) qui réponde, entre autres, à l'ensemble des besoins, mentionnés ci-dessus, et qui satisfasse aux exigences, déjà précisées plus haut, pour les procédés de coprécipitation en général.

Le but de la présente invention est encore de fournir un procédé de coprécipitation d'actinides à l'état d'oxydation (IV) qui ne présente pas les inconvénients, limitations, défauts et désavantages des procédés de l'art antérieur et qui résolve les problèmes de l'art antérieur.

Ce but, et d'autres encore, sont atteints, conformément à l'invention, par un procédé de coprécipitation (ou précipitation simultanée) d'actinides à l'état d'oxydation (IV), dans lequel :

l'ajout de complexant assure une stabilité thermodynamique dans le mélange des actinides (IV) - et sachant que la réaction redox à considérer correspondant à :

$$xAn^1(IV) + yAn^2(IV) \underset{2}{\overset{1}{\underset{\longleftarrow}{\longrightarrow}}} xAn^1(< IV) + yAn^2(> IV)$$

est spontanée dans le sens 1, en l'absence du complexant et est observée dans le sens 2, en présence du complexant - :

- On mélange intimement une première solution aqueuse d'un actinide $An^1$ à un état d'oxydation inférieur à IV, et au moins une deuxième solution aqueuse d'un actinide $An^2$ à un état d'oxydation supérieur à IV ;
- on ajoute un agent complexant organique, sélectif des actinides (IV), et constitué uniquement d'atomes d'oxygène, de carbone, d'azote et d'hydrogène audit mélange, de manière à amener spontanément, par réaction redox, les au moins deux actinides $An^1$ et $An^2$, à l'état d'oxydation IV et former les complexes des actinides $An^1$ et $An^2$ à l'état d'oxydation IV ;
- on réalise la précipitation simultanée desdits au moins deux complexes d'actinides $An^1$ (IV) et $An^2$ (IV).

La présente invention repose sur un nouveau concept de stabilité cinétique des états d'oxydation (IV), qui ne nécessite pas obligatoirement une stabilisation thermodynamique des états (IV) des actinides.

On va ainsi à l'encontre de la démarche unanimement suivie dans les procédés de l'art antérieur.

Grâce aux complexants mis en oeuvre selon l'invention, sans croisement des potentiels redox, mais par effet de « gel chimique », associé à la complexation des cations IV d'actinides, il est atteint une stabilité suffisante, pendant une longue durée, qui permet, entre autres, que :

- les solutions d'actinides $An^1$ (IV) et $An^2$ (IV) se mélangent intimement ;
- la précipitation des complexes d'$An^1$ (IV) et d'$An^2$ (IV) ait lieu ensuite de façon parfaitement simultanée ;
- la réaction d'oxydoréduction spontanée ne se produise pas pendant les deux phases de mélange et de précipitation.

Contrairement à l'art antérieur, cité plus haut, on fabrique, selon l'invention, par une seule coprécipitation homogène, des composés parfaitement homologues, aptes à fournir ensuite un oxyde mixte, lui-même parfaitement homogène.

La coprécipitation se déroule à partir d'un mélange des au moins deux solutions stables, dans lesquelles les actinides sont maintenus constamment à l'état de $An^1$ (IV) et $An^2$ (IV), ces au moins deux solutions étant préparées en milieu complexant, soit séparément, soit par réaction spontanée, suite au croisement des potentiels normaux apparents des couples redox.

En d'autres termes, selon l'invention, les solutions d'actinides (IV), peuvent être préparées en mélange homogène, en bénéficiant :

- soit, dans le cas général, de la stabilité cinétique obtenue en milieu complexant, sans croisement des potentiels redox ;
- soit de la stabilité thermodynamique, lorsque l'ordre des potentiels normaux des couples redox correspondants est inversé.

Dans les deux cas, la stabilité obtenue permet d'opérer la précipitation simultanée des actinides (IV).

Il est bien évident que, outre les avantages cités ci-dessus, le procédé selon l'invention présente également tous les avantages déjà mentionnés des procédés de précipitation.

Le procédé de l'invention se distingue fondamentalement au document « Atlas J. Nucl. Materials », cité plus haut. En effet, le procédé de l'invention est destiné, en premier lieu, à la préparation de poudres d'oxydes, tels que (U, Pu), parfaitement homogènes, parfaitement et spécifiquement adaptées à la fabrication de combustibles, tels que le MOX. Il peut aussi être appliqué à la fabrication d'autres co-oxydes d'éléments présentant des états d'oxydation IV en solution, par exemple, (Pu, Np), (Pu, Th), (U, Th), (U, Np) et leurs combinaisons (U, Pu, Np, Th).

Au contraire, le procédé de ce document de l'art antérieur a pour seul objectif, et ne permet que la fabrication de co-oxydes (U,Th). Il repose sur un concept fondamentalement différent de celui du procédé de l'invention, et ne permet pas la fabrication d'une grande variété de co-oxydes couvrant quasiment tous les actinides. Le procédé de ce document est extrêmement limité, il est basé sur une chimie spécifique à l'élément thorium et ne peut être en aucun cas transposé aux autres actinides. En particulier, ce procédé ne peut être appliqué à la préparation de co-oxydes parfaitement homogènes, tels que (U,Pu) pour la fabrication de combustibles, tels que le MOX.

Le procédé selon l'invention s'applique, de préférence, à la coprécipitation de deux actinides, mais il peut permettre aussi la coprécipitation de plus de deux actinides, par exemple, jusqu'à quatre actinides. Dans ce cas, on mélange intimement n solutions aqueuses d'actinides, à savoir depuis la solution aqueuse d'actinide $An^1$ jusqu'à une solution aqueuse d'actinide $An^n$ ; on ajoute l'agent complétant audit mélange contenant les actinides, depuis l'actinide $An^1$ jusqu'à l'actinide $An^n$ pour amener les actinides $An^1$ à $An^n$ à l'état d'oxydation (IV) et pour former chaque fois un complexe d'actinide, depuis le complexe de l'actinide $An^1$ à l'état d'oxydation (IV) jusqu'au complexe de l'actinide $An^n$ à l'état d'oxydation (IV), puis on réalise la précipitation simultanée desdits complexes d'actinides $An^1$ (IV), $An^2$ (IV),... $An^n$ (IV), à partir dudit mélange.

Dans ce qui suit, l'invention est généralement décrite dans le cas de deux actinides, mais on comprendra que cette description pourra s'appliquer à un nombre d'actinides supérieur à 2.

Dans le procédé de l'invention, l'agent complexant ou ligand organique, mis en oeuvre dans le procédé, est un agent complexant organique sélectif des actinides (IV) et est constitué uniquement d'atomes d'oxygène, de carbone, d'azote et d'hydrogène.

De ce fait, au contraire des complexants de type phosphotungstate, les agents complexants, selon l'invention, répondent à la norme, dite « CHON », c'est-à-dire qu'ils ne génèrent, lors de la calcination des précipités, que des produits de décomposition gazeux rejetables. Les précipités, selon l'invention, peuvent donc être utilisés pour la fabrication d'oxydes mixtes constituant des combustibles nucléaires, tels que le MOX.

Les agents complexants, qui remplissent ces conditions et qui permettent ainsi de réaliser le « gel cinétique » selon l'invention, sont connus de l'homme du métier ; ils peuvent être choisis parmi les acides polyaminocarboxyliques, les acides carboxyliques, les sels, par exemple d'ammonium ou d'ammonium quaternaire, de ceux-ci, et les autres agents complexants, chélatants, organiques, répondant aux critères « CHON ».

Parmi les acides polyaminocarboxyliques, on peut citer l'acide diéthylènetriaminepentacétique (DTPA), l'acide éthylènediaminetétraacétique (EDTA), l'acide cyclohexanediaminetétraacétique (CYDTA), l'acide hydroxyéthyléthylènediaminetétraacétique (EDTA-OH), l'acide triéthylènetétraminehexaacétique (TTHA) et leurs sels de métaux alcalins, par exemple les sels de lithium, sodium et potassium.

Parmi les acides carboxyliques, les acides polycarboxyliques, tels que diacides et triacides ; et les hydroxyacides sont préférés.

On peut citer, par exemple, l'acide oxalique, l'acide malonique, l'acide succinique, l'acide glutarique, le THFTCA : acide tétrahydrofurane-2,3,4,5-tétracarboxylique, l'acide citrique, l'acide lactique, l'acide glycolique, l'acide glycérique, l'acide tartrique, l'acide malique, l'acide nitriloacétique (NTA), l'acide hydroxyléthyliminodiacétique (HIDA) et leurs sels d'ammonium ou d'ammonium quaternaire.

Parmi les autres agents complexants, chélatants organiques, on peut citer les acides hydroxamiques, tels que l'acide octane 1-8 dihydroxamique et' les molécules-cages, telles que le K21DA : ou acide 1,7-diaza-4,10,13-trioxacyclopentadécane-N,N' diacétique, le DOTA : ou acide 1,4,7,10-tétraazacyclodécane N,N',N'',N'''-tétraacétique, etc., les cryptands et autres éthers-couronnes.

L'agent complexant, plus particulièrement préféré, est l'acide oxalique et ses sels, tels que l'oxalate d' ammonium ; en effet, son utilisation entraîne une série d'avantages particuliers supplémentaires qui seront explicités plus loin.

La précipitation simultanée ou coprécipitation des actinides $An^1$ et $An^2$ est généralement réalisée par addition au mélange d'un sel d'ammonium et/ou d'un sel d'ammonium quaternaire, de formule $NR_4^+$, où R est un groupe alkyle ; ledit sel est, de préférence, un nitrate se trouvant généralement en solution à température ambiante, dans un milieu eau/éthanol, dans des proportions généralement de 30 % d'eau et de 70 % d'éthanol, en volume.

En variante, la coprécipitation ou précipitation simultanée est réalisée par acidification du mélange.

Cette acidification peut être réalisée, de préférence, par addition d'acide nitrique au milieu.

Le pH de précipitation dépend notamment des actinides et des complexants, mais il est généralement de 0 à 1, de préférence l'acidité finale est voisine de 1 M.

Dans le procédé de l'invention, la première solution d'un actinide $An^1$ à un état d'oxydation inférieure à (IV) et la deuxième solution d'un actinide $An^2$ à un état d'oxydation supérieur à (IV) sont généralement des solutions aqueuses acides.

De préférence, il s'agit de solutions aqueuses d'acide nitrique.

La concentration des actinides $An^1$ et $An^2$ dans chacune des solutions peut varier dans de larges limites, mais elle est généralement de $10^{-3}$ M à 1 M, de préférence de 0,1 à 0,2 M, ou généralement de 0,1 à 100g. $L^{-1}$.

De préférence, l'actinide $An^1$ a un état d'oxydation (III) et l'actinide $An^2$ a un état d'oxydation (VI).

Lesdites première et deuxième solutions sont ensuite mélangées intimement dans une proportion qui correspond aux proportions respectives de la réaction redox que l'on souhaite obtenir.

Le rapport molaire $An^1/An^2$ dans le mélange sera donc généralement égal au rapport $\dfrac{x}{y}$, conformément à la réaction :

$$xAn^1\ (< IV)\ +\ yAn^2\ (> IV)\ \rightarrow\ xAn^1\ (IV)\ +\ yAn^2\ (IV).$$

Cette réaction est l'inverse de la réaction redox, qui est spontanée en milieu non complexant.

En outre, il faut que les proportions de mélange des deux solutions correspondent aux proportions des deux actinides dans un oxyde mixte susceptible d'être préparé par calcination à partir du coprécipité obtenu.

L'agent complexant ou ligand organique, qui est ajouté au mélange des au moins deux solutions, est un agent complexant organique sélectif des actinides (IV) et est constitué uniquement d'atomes d'oxygène, de carbone, d'azote et d'hydrogène.

Ces complexants ont déjà été décrits plus haut.

Le rapport de la concentration en agent complexant à la concentration totale des au moins deux actinides dans le mélange ($An^1$ + $An^2$) est fixée de façon à conserver un excès de ligand.

Le rapport de la concentration en agent complexant à la concentration de chacun des actinides $An^1$ et $An^2$ est généralement de 1 à 60, de préférence de 1 à 20.

Le rapport agent complexant/actinides ($An^1$ + $An^2$) va généralement de 1 à 40, de préférence de 1 á 20, de péference encore de 1 à 5, mieux de 1 à 4.

De préférence, le pH du mélange est ajusté de façon à favoriser la complexation sélective des états d'oxydation (IV).

On procède ensuite à la co (précipitation) ou précipitation simultanée, dans les conditions déjà décrites plus haut. Le procédé, est réalisé généralement entre 0°C et l'ébullition, de préférence à une température proche de l'ambiante, par ex de 20 à 60°C aussi bien dans l'étape de mélange, que dans l'étape d'addition d'agent complexant, que dans l'étape de précipitation simultanée.

L'invention a également trait à un procédé de préparation d'oxydes mixtes d'actinides $An^1$ et $An^2$, dans lequel on coprécipite lesdits actinides par le procédé selon l'invention, décrit plus haut, puis on procède à la calcination du (co) précipité, ainsi obtenu.

Du fait que, selon le procédé de l'invention, les composés obtenus à l'issue de la coprécipitation sont des composés totalement homologues, les oxydes mixtes préparés, après calcination, sont des oxydes mixtes s'approchant d'une solution solide parfaite.

Les solutions solides d'oxyde mixte peuvent, en outre, être obtenues en toutes proportions.

La calcination est généralement réalisée dans les conditions suivantes : température égale ou supérieure à 650°C sous atmosphère neutre ou inerte (argon, etc.) et une durée supérieure ou égale à 1 heure.

Les actinides $An^1$ et $An^2$ sont différents et sont, chacun, choisis dans le groupe des actinides, mais, de préférence, $An^1$ et $An^2$ sont respectivement l'uranium et le plutonium.

De ce fait, le procédé selon l'invention est, en premier lieu, applicable à des mélanges binaires, mais il peut aussi s'appliquer à des mélanges multiples de plus de deux actinides.

Les mélanges servent, en particulier, pour la fabrication de combustible nucléaire de type oxyde mixte d'uranium et de plutonium, dit MOX.

L'oxyde préparé, selon l'invention, peut être utilisé soit comme mélange-mère de poudres, soit comme mélange de poudre à la teneur finale. La suite du procédé de préparation des pastilles de combustible MOX est connue et comprend classiquement des étapes de pressage, frittage et rectification.

Le procédé selon l'invention peut être également avantageusement utilisé pour la fabrication de cibles de transmutation (Np) ou pour le conditionnement stable des matières (U, Pu, Np, Th) sous forme d'oxydes. Les oxydes étant préparés selon une procédure similaire à celles décrites ci-après.

Le procédé selon l'invention va maintenant être décrit de manière détaillée dans la description qui suit, donnée à titre illustratif et non limitatif.

La première solution aqueuse d'un premier actinide $An^1$, qui se trouve à un état d'oxydation supérieur à (IV) est, en général, une solution acide, de préférence une solution aqueuse d'acide nitrique.

La concentration en acide de la solution est généralement de 1 M à 5 M, de préférence de 1 M à 3 M.

Il est à noter que les solutions susceptibles de contenir des agents oxydants, tels que l'acide nitrique, l'acide nitreux, ou de se trouver en contact avec ceux-ci, tels que l'oxygène de l'air, sont généralement stabilisés par addition d'un ou de plusieurs composé(s) anti-nitreux, tels que l'hydrazine, les ions hydrazinium, ou leurs produits dérivés.

L'agent complexant est choisi parmi les composés déjà cités plus haut ; il est choisi, de préférence, parmi l'acide oxalique et ses sels d'ammonium.

En effet, lorsque l'effet de gel chimique est produit par l'acide oxalique, l'invention présente une série d'avantages particuliers supplémentaires :

- le réactif est déjà utilisé dans le procédé « PUREX » lors de la conversion finale en oxyde $PuO_2$ du nitrate de plutonium issu des cycles de purification. Son utilisation dans un procédé de coprécipitation U,Pu est a priori compatible avec les appareils existants dans les ateliers de retraitement. La décomposition des oxalates d'actinides est aisée et conduit généralement à des oxydes ayant une bonne aptitude à la frittabilité ;
- la gestion de ce réactif dans les effluents de ces ateliers est aujourd'hui bien maîtrisée ;
- le même composé peut assurer à la fois et successivement l'effet de gel chimique et la précipitation des actinides (IV) selon l'acidité du milieu ;
- un simple ajout d'acide nitrique permet de provoquer la précipitation du mélange de complexes d'actinides (IV).

Le domaine de pH, dans lequel est réalisé l'addition du ligand, complexant, dépend des formes protonées du ligand et est choisi de manière à former les complexes supérieurs ligand - $An^1$ (IV), par exemple ligand - Pu (IV). Généralement, la plage de pH sera de 0 à 6 et, de préférence de 1 à 3.

La concentration en actinides $An^2$, dans la deuxième solution, est généralement de $10^{-3}$ à 1 M et, de préférence, entre 0,1 et 0,2 M.

De préférence, les deux solutions sont toutes deux des solutions aqueuses, de préférence, des solutions aqueuses d'acide nitrique. Leur pH est ajusté habituellement entre 1 et 3, de manière à se trouver dans la plage de formation ci-dessus des complexes voulus.

Les deux solutions ainsi obtenues sont intimement mélangées, par exemple au moyen d'un agitateur.

Par intimement mélangées, on entend que le milieu est homogène à l'échelle du micromélange.

La durée de cette étape de mélange est généralement de 1 à 15 mn.

La solution formant le mélange est stable pendant une longue durée pouvant aller de 5 heures à 7 jours. On dispose donc d'un large délai pour réaliser l'étape finale de coprécipitation ou de précipitation simultanée.

L'étape suivante du procédé selon l'invention est la coprécipitation ou précipitation simultanée des complexes de $An^1$ et $An^2$, par exemple de U (IV) et de Pu (IV). Cette coprécipitation s'effectue, selon l'invention et du fait de la grande stabilité des complexes de $An^1$ et de $An^2$, de manière homogène et la calcination du précipité conduit donc à un oxyde mixte $(An^1, An^2)O_2$, par exemple $(U, Pu)O_2$ également parfaitement homogène.

La précipitation simultanée de $An^1$ (IV) et $An^2$ (IV), dont le choix dépend, par exemple de la nature du ligand, toujours maintenus de manière stable à l'état d'oxydation (IV), peut être réalisée par tout procédé connu, mais de préférence elle est effectuée par addition au mélange décrit plus haut d'un sel d'ammonium et/ou d'ammonium quaternaire $R_4N^+$ ; ce sel peut être choisi, par exemple, parmi, les halogénures, nitrates, etc.. Le sel préféré est le nitrate, lorsque le mélange est constitué, par exemple par une solution aqueuse nitrique.

Dans la formule précédente, R représente généralement un groupe alkyle linéaire ou ramifié, généralement de 1 à 12 atomes de carbone ; des exemples de tels groupes sont les groupes méthyle, propyle, isopropyle, butyle, isobutyle, tertbutyle, etc..

Cette précipitation est généralement mise en oeuvre dans un milieu eau-éthanol dans des proportions volumiques de 30/70.

On utilise, de préférence, un tel procédé de coprécipitation, lorsque le ligand (L) est choisi parmi les acides polyaminocarboxyliques.

Un autre procédé de coprécipitation consiste à acidifier le mélange, par exemple par addition d'acide nitrique, de façon à atteindre le pH de coprécipitation voulu ; ce pH est généralement ainsi de 0 à 1.

Le procédé de coprécipitation par acidification du mélange est utilisé, de préférence, lorsque le ligand (L) est choisi parmi les acides carboxyliques.

La coprécipitation, réalisée généralement à la même température que les étapes précédentes, c'est-à-dire à une température de 0 à 60°C donne un composé totalement homogène de formule $(U,Pu)L_{x,n}H_2O$, qui est séparé du mélange par tout moyen de séparation liquide-solide adéquat, par exemple par filtration, centrifugation ou autre.

Si l'on souhaite préparer un oxyde mixte, le coprécipité récupéré est ensuite calciné pour donner l'oxyde $(An^1, An^2)O_2$, par exemple $(U,Pu)O_2$, de préférence sous atmosphère inerte, à une température d'au moins 650°C (de préférence, 950°C) et pour une durée minimale d'une heure (de préférence, 2 heures ou plus).

De préférence, on atteint la température finale de calcination, par exemple, de 950°C, en réalisant des montées en température et en observant des paliers à des températures, par exemple, de 150 et 600°C.

Dans le procédé de l'invention, le complexant (répondant au concept CHON) utilisé est suffisamment fort et sélectif des actinides à l'état d'oxydation IV, et il est possible d'opérer selon la description suivante :

- une première solution d'actinide $An^1$ se trouve à un état d'oxydation inférieur à IV (il s'agit, par exemple, d'une solution nitrique de plutonium III). La concentration d'actinide est généralement de $10^{-3}$ à 1 M, de préférence entre 0,1 à 0,2 M. L'acidité est généralement de 1 à 3 M ;
- une seconde solution d'actinide $An^2$ se trouve à un état d'oxydation supérieur à IV (il s'agit, par exemple, d'une solution de nitrate d'uranyle). La concentration d'actinide et l'acidité se situent dans la même plage que précédemment ;
- les deux solutions sont mélangées intimement dans les proportions correspondant à celles de la réaction redox que l'on veut obtenir. Par exemple, le rapport $\dfrac{\text{Pu III}}{\text{U VI}}$ sera fixé à 2 dans la perspective de provoquer la réaction U VI + 2Pu III → U IV + 2Pu IV, inverse de la réaction redox qui est spontanée en milieu non complexant ;
- l'ajout du complexant au mélange précédent est réalisé en fixant le rapport ligand/actinides $(An^1 + An^2)$, de façon à ne conserver qu'un léger excès de ligand.

Cet excès est déterminé suivant la composition des complexes limites formés entre le ligand L et les actinides $An^1$ et $An^2$ à l'état d'oxydation IV.

Le pH de la solution est ajusté de manière à favoriser la complexation sélective des états d'oxydation IV ; par exemple, pour le couple d'actinides U VI, Pu III et si le choix du ligand L est le DTPA, on pourra fixer pH = 1,45 et

$$\dfrac{\text{DTPA}}{\text{An}^1 + \text{An}^2} = 1{,}25 \; ;$$

- suite à l'ajout du complexant, la réaction redox, permettant d'obtenir $An^1$ et $An^2$, à l'état d'oxydation IV, se produit spontanément. Dans le cas de U IV et Pu III, la réaction est totale, en moins de 24 heures.

La description de la suite des étapes du procédé, à savoir la précipitation, est ensuite telle que traité précédemment.

L'invention va maintenant être décrite en référence aux exemples suivants, donnés à titre illustratif et non limitatif. Les exemples 1 à 3 ont donnés à titre d'illustration et l'exemple 4 est conforme à l'invention.

Exemple 1

Dans cet exemple, on réalise la coprécipitation de U(IV) et de Pu(IV), à l'aide de DTPA (acide diéthylènetriaminepentacétique), en tant qu'agent complexant.

Les conditions opératoires sont les suivantes :

- température : température ambiante (20 à 26°C) ;
- [U(IV)] = [Pu(IV)] = 0,008 M ;
- [DTPA] = 0,01 M ;
- [NO$_3^-$] = 1 M ;
- Ajustage de l'acidité libre.

Dans ces conditions, on forme le complexe limite 1/1 U(IV) - DTPA et Pu(IV) - DTPA.

L'effet de "gel chimique" obtenu est tel que lorsque ces deux complexes sont mélangés en solution avec tous les rapports possibles U/U + Pu (U/U + Pu entre 0 et 1), la solution reste stable sur une période de 18 heures au moins.

En présence d'ions hydrazinium [N$_2$H$_5$] = 0,1 M, la stabilité de U IV et Pu IV en solution est de plus de 30 jours. On dispose donc d'un large délai pour assurer l'opération de précipitation après mélange U et Pu.

Pour co-prêcipiter ces deux complexes de façon homogène, on se place en milieu eau-éthanol (30/70, en volume) en ajustant le pH à 7,5 par de l'ammoniac concentré.

Exemple 2

Dans cet exemple, on réalise la coprécipitation de U(IV) et de Pu(IV) à l'aide d'acide oxalique ou d'oxalate d'ammonium H$_2$C$_2$O$_4$ ou (NH$_4$)$_2$C$_2$O$_4$.

Les conditions opératoires sont les suivantes :

- Température : température ambiante, à savoir 21<T°C<26,
- [U(IV)]=[Pu(IV)]=0,004 M,
- [C$_2$O$_4$$^{2-}$]=0,08 M,
- [NO$_3^-$]=1 M,
- ajustage de l'acidité libre.

La stoechiométrie du complexe limite est ¼, les complexes formés sont les suivants : U(C$_2$O$_4$)$_4$$^{4-}$ et Pu(C$_2$O$_4$)$_4$$^{4-}$.

Lorsque ces deux complexes sont mélangés (avec tous les rapports U/U + Pu entre 0 et 1), leur stabilité est assurée pendant au moins 5 heures. Après cette durée, on voit, par spectrophotométrie U.V. visible, disparaître le complexe U(C$_2$O$_4$)$_4$$^{4-}$. La disparition de ce complexe est complète en 5 jours sans que le spectre caractéristique du complexe Pu(C$_2$O$_4$)$_4$$^{4-}$ soit pour autant profondément modifié.

Conservé sous atmosphère exempte d'oxygène, la durée de stabilité du précédent mélange dépasse 5 jours.

Pour coprécipiter ces deux complexes de façon homogène, on peut procéder selon deux méthodes :

- soit on se place en milieu eau-éthanol (30/70 en volume),
- soit on ajoute de l'acide nitrique dans le mélange.

Dans le deuxième cas, les conditions de précipitation sont les suivantes :

- milieu HNO$_3$ 1 M, soit pH = 0,
- précipitation simultanée de l'uranium (IV) et du plutonium (IV) en milieu oxalate.

Il n'est pas nécessaire d'augmenter la concentration d'acide nitrique, qui induirait la mise en solution de l'uranium (IV) et du plutonium (IV) et donc la formation d'uranium (VI) et de plutonium (III) (espèces observées par spectrophotométrie).

Le rendement de précipitation pour chaque actinide (IV) est supérieur à 95%.

Exemple 3

Dans cet exemple, on réalise la coprécipitation de U(IV) et de Pu(IV) à l'aide de NTA (acide nitriloacétique).

Les conditions opératoires sont les suivantes :

- Température : température ambiante 21<T°C<26
- [U(IV]=[Pu(IV)]=0,001 M
- [NTA] = 0,006 M
- [NO$_3$] = 1 M
- ajustage de l'acidité libre.

La stoechiométrie du complexe limite est 1/1, les complexes formés sont les suivants : U(NTA) et Pu(NTA). Ces complexes sont formés dans le domaine de pH 5 à 7, alors que vers pH = 1,1 apparaissent d'autres espèces : notamment An(HNTA)$^{2+}$. Lorsque les deux complexes limite sont mélangés avec tous les rapports U/U + Pu entre 0 et 1, vers pH = 6, leur stabilité est assurée pendant au moins 1 heure.

Pour coprécipiter ces deux complexes de façon homogène, une méthode efficace est proposée en milieu eau-éthanol (30/70 en volume) en ajustant le pH à une valeur supérieure à 7 par l'ajout d'une base concentrée.

On a regroupé dans le tableau I, les données relatives aux étapes de formation en solution des complexes supérieurs de l'uranium (IV) et du plutonium (IV) :

Tableau I : Conditions opératoires de formation des complexes supérieurs de l'uranium (IV) et du plutonium (IV) avec l'acide oxalique, le DTPA et le NTA.

| Ligand | $H_2C_2O_4$ | DTPA | NTA |
|---|---|---|---|
| [Ligand]/[An(IV)] minimum | 4 | 1 | 1 |
| Domaine du pH | 1,5<pH<3 | 2<pH<4 | 5<pH<7 |

Dans les trois exemples cités ci-dessus, il a été démontré que grâce au procédé de l'invention on a réussi à inhiber la réaction spontanée entre U(IV) et Pu(IV).

Exemple 4

Cet exemple illustre le cas particulier du second mode de réalisation de l'invention, où la stabilité thermodynamique des états d'oxydation IV au sein du mélange peut être obtenue.

Les conditions opératoires sont les suivantes :

- température ambiante (21 - 26°C) ;
- [U (VI)] = 0,0022 M ;
- [Pu (III)] = 0,0044 M ;
- [DTPA] = 0,008 M ;
- [$NO_3^-$] = 1 M ;
- [$N_2H_5^+$] = 0,1 M ;
- pH = 1,45.

A ce pH, U (VI) est partiellement complexé et Pu (III) presque totalement complexé par le DTPA sous forme de complexes 1 - 1. Le DTPA est légèrement en excès et le rapport $\dfrac{Pu}{U}$ est choisi égal à 2.

Dans ces conditions, on observe l'oxydation progressive du Pu III - DTPA en Pu IV - DTPA, tandis que s'opère simultanément la réduction de U VI - DTPA en U IV - DTPA.

La réaction U (VI) - DTPA + Pu (III) - DTPA → U (IV) - DTPA + Pu (IV) - DTPA est complète au bout de 10 h 30. Après ce laps de temps, seul les complexes 1 - 1 non protonés de Pu IV - DTPA et U IV - DTPA sont observables par spectrophotométrie UV - visible. Le rapport $\dfrac{Pu}{U}$, dans ce mélange des deux complexes, est conservé égal à 2.

La coprécipitation du mélange ainsi obtenu est ensuite similaire à celle décrite dans l'exemple 1.

Exemple 5

Dans cet exemple, on réalise la calcination des précipités obtenus dans les exemples 1 à 4 dans les conditions de calcination suivantes :

- montée en température à partir de la T ambiante, pour atteindre à raison de 10°C par minute, la température de 150°C, soit après un temps de chauffage d'environ 15 minutes ;
- palier à 150°C pendant 20 minutes ;
- montée en température à partir du palier à 150°C, à raison de 10°C par minute, pendant 45 minutes ;
- palier à 600°C pendant 40 minutes ;
- montée en température à partir du palier à 600°C, à raison de 15°C par minute, pendant 23 minutes ;

- palier final à 950°C pendant 2 heures.

Après l'opération finale de calcination 2 h à 950°C, l'oxyde issu de la décomposition du précipité peut être caractérisé par diffraction X.

Il a été ainsi prouvé, dans tous les cas (exemples 1 à 4), que quel que soit le mélange U,Pu initial en solution, l'oxyde mixte formé est homogène et dans les mêmes proportions U/Pu que le mélange initial en solution.

## Revendications

1. Procédé de coprécipitation d'actinides à l'état d'oxydation IV, dans lequel :

   - on mélange intimement une première solution aqueuse d'un actinide An$^1$ à un état d'oxydation inférieur à IV et au moins une deuxième solution aqueuse d'un actinide An$^2$ à un état d'oxydation supérieur à IV ;
   - on ajoute un agent complexant organique, sélectif des actinides (IV), et constitué, uniquement d'atomes d'oxygène, de carbone, d'azote et d'hydrogène audit mélange, de manière à amener spontanément, par réaction redox, les au moins deux actinides An$^1$ et An$^2$, à l'état d'oxydation IV et former les complexes des actinides An$^1$ et An$^2$ à l'état d'oxydation IV ;
   - on réalise la précipitation simultanée desdits au moins deux complexes d'actinides An$^1$ (IV) et An$^2$ (IV).

2. Procédé selon la revendication 1, dans lequel ledit agent complexant est choisi parmi les acides polyaminocarboxyliques, les acides carboxyliques, les sels de ceux-ci, et les autres agents complexants, chélatants, organiques.

3. Procédé selon la revendication 2, dans lequel ledit agent complexant est choisi parmi l'acide diéthylènetriaminepentacétique (DTPA), l'acide éthylènediaminetétraacétique (EDTA) ; l'acide cyclohexanediaminetétraacétique (CYDTA), l'acide hydroxyéthyléthylènediaminetétraacétique (EDTA-OH), l'acide triéthylènetétraminehexaacétique (TTHA) et leurs sels de métaux alcalins, par exemple les sels de lithium, sodium et potassium.

4. Procédé selon la revendication 2, dans lequel ledit agent complexant est choisi parmi les acides polycarboxyliques, tels que les diacides et triacides, et les hydroxyacides.

5. Procédé selon la revendication 4, dans lequel ledit agent complexant est choisi parmi l'acide oxalique, l'acide malonique, l'acide succinique, l'acide glutarique, l'acide citrique, l'acide lactique, l'acide glycolique, l'acide glycérique, l'acide tartrique, l'acide malique et leurs sels d'ammonium ou d'ammonium quaternaire.

6. Procédé selon la revendication 2, dans lequel ledit agent complexant est choisi parmi l'acide tétrahydrofurane 2,3,4,5-tétracarboxylique (THFTCA), l'acide nitriloacétique (NTA), l'acide hydroxyéthyliminoacétique (HIDA) et leurs sels d'ammonium ou d'ammonium quaternaire.

7. Procédé selon la revendication 2, dans lequel ledit agent complexant est choisi parmi les acides hydroxamiques, tels que l'acide octane 1,8-dihydroxamique; les molécules cages, tels que l'acide 1,7-diaza-4,10,13-trioxacylopentadécane-N,N' diacétique (K21DA), l'acide 1,4,7,10-tétraazacyclodécane N,N',N'',N'''-tétraacétique (DOTA), les criptands, et les éthers couronnes.

8. Procédé selon l'une quelconque des revendications 1 à 7, dans lequel lesdites première et deuxième solutions d'actinides An$^1$ et An$^2$ sont des solutions acides.

9. Procédé selon la revendication 8, dans lequel lesdites solutions sont des solutions aqueuses d'acide nitrique.

10. Procédé selon l'une quelconque des revendications 1 à 9, dans lequel la concentration des actinides An$^1$ et An$^2$ dans chacune des solutions est de 0,1 à 100 g.l$^{-1}$.

11. Procédé selon l'une quelconque des revendications 1 à 10, dans lequel le rapport de la concentration en agent complexant à la concentration en chacun des actinides An$^1$ et An$^2$ est de 1 à 60, de préférence de 1 à 20.

12. Procédé selon l'une quelconque des revendications 1 à 11, dans lequel lesdites première et deuxième solutions sont mélangées dans une proportion qui correspond aux proportions respectives des deux actinides An$^1$/An$^2$ dans un oxyde mixte susceptible d'être préparé par calcination à partir du coprécipité.

**13.** Procédé selon l'une quelconque des revendications 1 à 12, dans lequel le procédé est réalisé à une température comprise entre 0°C et l'ébullition.

**14.** Procédé selon l'une quelconque des revendications 1 à 13, dans lequel la concentration des actinides dans chacune des solutions est de $10^{-3}$ M à 1 M, de préférence de 0,1 à 0,2 M.

**15.** Procédé selon l'une quelconque des revendications 1 à 14, dans lequel le rapport de la concentration en agent complexant à la concentration totale des au moins deux actinides dans le mélange est de 1 à 40, de préférence de 1 à 20, de préférence 1 à 5, mieux de 1 à 4.

**16.** Procédé selon l'une quelconque des revendications 1 à 15, dans lequel l'actinide $An^1$ a un état d'oxydation (III) et l'actinide $An^2$ a un état d'oxydation (VI).

**17.** Procédé selon l'une quelconque des revendications 1 à 16, dans lequel la coprécipitation ou précipitation simultanée est réalisée par addition au mélange d'un sel d'ammonium et/ou d'un sel d'ammonium quaternaire $NR_4^+$, où R est un groupe alkyle.

**18.** Procédé selon la revendication 17, dans lequel ledit sel d'ammonium ou d'ammonium quaternaire qui est, de préférence, un nitrate, se trouve en solution dans un milieu eau/éthanol.

**19.** Procédé selon l'une quelconque des revendications 1 à 16, dans lequel la coprécipitation ou précipitation simultanée est réalisée par acidification du mélange.

**20.** Procédé selon l'une quelconque des revendications 1 à 19, dans lequel $An^1$ est Pu et $An^2$ est U.

**21.** Procédé de préparation d'oxydes mixtes des actinides $An^1$ et $An^2$ dans lequel on coprécipite lesdits actinides à l'état d'oxydation (IV) par le procédé selon l'une quelconque des revendications 1 à 20 puis on procède à la calcination du précipité ainsi obtenu.

**22.** Procédé selon la revendication 21, dans lequel la calcination est réalisée sous atmosphère inerte ou neutre, à une température égale ou supérieure à 650°C et pour une durée supérieure ou égale à 1 heure.

**Patentansprüche**

**1.** Verfahren zur Copräzipitation von Actinidenelementen im Oxidationszustand (IV), bei dem man:

- eine erste wässrige Lösung eines Actinidenelements $An^1$ in einem Oxidationszustand < IV und mindestens eine zweite wässrige Lösung eines Actinidenelements $An^2$ in einem Oxidationszustand > IV innig miteinander mischt;
- einen für Actinidenelemente (IV) selektiven organischen Komplexbildner, der nur aus Sauerstoff-, Kohlenstoff-, Stickstoff- und Wasserstoffatomen besteht, zu der Mischung in der Weise zugibt, dass die mindestens zwei Actinidenelemente $An^1$ und $An^2$ durch eine Redoxreaktion spontan in den Oxidationszustand (IV) überführt und Komplexe der Actinidenelemente $An^1$ und $An^2$ im Oxidationszustand (IV) gebildet werden; und
- die gleichzeitige Präzipitation der genannten mindestens zwei Komplexe der Actinidenelemente $An^1$ (IV) und $An^2$ (IV) durchführt.

**2.** Verfahren nach Anspruch 1, bei dem der genannte Komplexbildner ausgewählt wird aus der Gruppe Polyaminocarbonsäuren, Carbonsäuren, Salzen derselben und anderen organischen Komplexbildnern und Chelatbildnern.

**3.** Verfahren nach Anspruch 2, bei dem der genannte Komplexbildner ausgewählt wird aus der Gruppe Diethylentriaminpentaessigsäure (DTPA), Ethylendiamin-tetraessigsäure (EDTA), Cyclohexandiamin-tetraessigsäure (CYDTA), Hydroxyethylethylendiamin-tetraessigsäure (EDTA-OH), Triethylentetramin-hexaessigsäure (TTHA) und ihren Alkalimetallsalzen, beispielsweise ihren Lithium-, Natrium- und Kaliumsalzen.

**4.** Verfahren nach Anspruch 2, bei dem der genannte Komplexbildner ausgewählt wird aus der Gruppe der Polycarbonsäuren, wie z.B. der Disäuren und Trisäuren, und der Hydroxysäuren.

**5.** Verfahren nach Anspruch 4, bei dem der genannte Komplexbildner ausgewählt wird aus der Gruppe Oxalsäure, Malonsäure, Bernsteinsäure, Glutarsäure, Citronensäure, Milchsäure, Glycolsäure, Glycerinsäure, Weinsäure, Apfelsäure und ihren Ammonium- oder quaternäre Ammoniumsalzen.

**6.** Verfahren nach Anspruch 2, bei dem der genannte Komplexbildner ausgewählt wird aus der Gruppe Tetrahydrofuran-2,3,4,5-tetracarbonsäure (THFTCA), Nitriloessigsäure (NTA), Hydroxyethyliminoessigsäure (HIDA) und ihren Ammonium- oder quaternären Ammoniumsalzen.

**7.** Verfahren nach Anspruch 2, bei dem der genannte Komplexbildner ausgewählt wird aus der Gruppe der Hydroxamsäuren, wie z.B. Octan-1,8-dihydroxamsäure; der Käfigmoleküle, wie z.B. 1,7-Diaza-4,10,13-trioxacyclopentadecan-N,N'-diessigsäure (K21 DA), 1,4,7,10-Tetraazacyclodecan-N,N',N'',N'''-tetraessigsäure (DOTA), der Kryptanden und der Kronenether.

**8.** Verfahren nach einem der Ansprüche 1 bis 7, bei dem die genannten Lösungen der ersten und zweiten Actinidenelemente $An^1$ und $An^2$ Säurelösungen sind.

**9.** Verfahren nach Anspruch 8, bei dem die genannten Lösungen wässrige Salpetersäure-Lösungen sind.

**10.** Verfahren nach einem der Ansprüche 1 bis 9, bei dem die Konzentration der Actinidenelemente $An^1$ und $An^2$ in jeder der Lösungen 0,1 bis 100 g/L beträgt.

**11.** Verfahren nach einem der Ansprüche 1 bis 10, bei dem das Verhältnis zwischen der Konzentration des Komplexbildners und der Konzentration jedes der Actinidenelemente $An^1$ und $An^2$ 1 bis 60, vorzugsweise 1 bis 20, beträgt.

**12.** Verfahren nach einem der Ansprüche 1 bis 11, bei dem die genannten ersten und zweiten Lösungen in einem Mengenverhältnis miteinander gemischt werden, das den jeweiligen Mengenanteilen der beiden Actinidenelemente $An^1/An^2$ in einem Mischoxid entspricht, das durch Calcinieren aus dem Copräzipitat hergestellt werden kann.

**13.** Verfahren nach einem der Ansprüche 1 bis 12, das bei einer Temperatur zwischen 0 °C und der Siedetemperatur durchgeführt wird.

**14.** Verfahren nach einem der Ansprüche 1 bis 13, bei dem die Konzentration der Actinidenelemente in jeder der Lösungen $10^{-3}$ M bis 1 M, vorzugsweise 0,1 M bis 0,2 M, beträgt.

**15.** Verfahren nach einem der Ansprüche 1 bis 14, bei dem das Verhältnis zwischen der Konzentration des Komplexbildners und der Gesamtkonzentration der mindestens zwei Actinidenelemente in der Mischung 1 bis 40, vorzugsweise 1 bis 20, besonders bevorzugt 1 bis 5 und am besten 1 bis 4, beträgt.

**16.** Verfahren nach einem der Ansprüche 1 bis 15, bei dem das Actinidenelement $An^1$ einen Oxidationszustand (III) aufweist und das Actinidenelement $An^2$ einen Oxidationszustand (VI) aufweist.

**17.** Verfahren nach einem der Ansprüche 1 bis 16, bei dem die Copräzipitation oder gleichzeitige Präzipitation durchgeführt wird durch Zugabe eines Ammoniumsalzes und/oder eines quaternären Ammoniumsalzes $NR_4^+$, worin R für eine Alkylgruppe steht, zu der Mischung.

**18.** Verfahren nach Anspruch 17, bei dem das genannte Ammoniumsalz oder quaternäre Ammoniumsalz, das vorzugsweise ein Nitrat ist, in einem Wasser/Ethanol-Medium gelöst ist.

**19.** Verfahren nach einem der Ansprüche 1 bis 16, bei dem die Copräzipitation oder gleichzeitige Präzipitation durch Ansäuern der Mischung durchgeführt wird.

**20.** Verfahren nach einem der Ansprüche 1 bis 19, in dem $An^1$ für Pu und $An^2$ für U stehen.

**21.** Verfahren zur Herstellung von Mischoxiden der Actinidenelemente $An^1$ und $An^2$, bei dem man die genannten Actinidenelemente im Oxidationszustand (IV) nach dem Verfahren nach einem der Ansprüche 1 bis 20 copräzipitiert und dann die Calcinierung des so erhaltenen Präzipitats durchführt.

**22.** Verfahren nach Anspruch 21, bei dem man die Calcinierung in einer inerten oder neutralen Atmosphäre bei einer Temperatur von ≥ 650 °C und für eine Zeitspanne von ≥ 1 h durchführt.

**Claims**

1. Process for coprecipitating actinides in oxidation state (IV) in which:

   - one intimately mixes a first aqueous solution of an actinide An$^1$ in an oxidation state less than IV and at least one second aqueous solution of an actinide An$^2$ in an oxidation state greater than IV;
   - one adds an actinide (IV) selective, organic complexing agent, and composed uniquely of oxygen, carbon, nitrogen and hydrogen atoms, to said mixture, in such a way as to spontaneously bring, by redox reaction, the at least two actinides An$^1$ and An$^2$ to the oxidation state IV and form complexes of actinides An$^1$ and An$^2$ in oxidation state IV;
   - one carries out the simultaneous precipitation of said at least two actinide complexes An$^1$ (IV) and An$^2$ (IV).

2. Process according to claim 1, in which said complexing agent is chosen from among polyamino carboxylic acids, carboxylic acids, salts thereof, and other complexing, chelating, organic agents.

3. Process according to claim 2, in which said complexing agent is chosen from among diethylene triamine pentacetic acid (DTPA), ethylene diamine tetraacetic acid (EDTA), cyclohexane diamine tetraacetic acid (CYDTA), hydroxyethyl ethylene diamine tetraacetic acid (EDTA-OH), triethylene tetramine hexaacetic acid (TTHA) and alkali metal salts thereof, for example lithium, sodium and potassium salts.

4. Process according to claim 2, in which said complexing agent is chosen from among polycarboxylic acids, such as diacids and triacids, and hydroxyacids.

5. Process according to claim 4, in which said complexing agent is chosen from among oxalic acid, malonic acid, succinic acid, glutaric acid, citric acid, lactic acid, glycolic acid, glyceric acid, tartric acid, malic acid and ammonium or quaternary ammonium salts thereof.

6. Process according to claim 2, in which said complexing agent is chosen from among tetrahydrofuran-2,3,4,5-tetracarboxylic acid (THFTCA), nitrilo acetic acid (NTA), hydroxy ethylimino acetic acid (HIDA) and ammonium or quaternary ammonium salts thereof.

7. Process according to claim 2, in which said complexing agent is chosen from among hydroxamic acids, such as octane 1,8-dihydroxamic acid; cage molecules, such as 1,7-diaza-4,10,13-trioxacyclopentadecane-N, N'-diacetic acid (K21DA), 1,4,7,10-tetraazacyclodecane-N,N',N'',N'''-tetraacetic acid (DOTA), cryptands and crown ethers.

8. Process according of claims 1 to 7, in which said first and second actinides An$^1$ and An$^2$ solutions are acid solutions.

9. Process according to claim 8, in which said solutions are aqueous solutions of nitric acid.

10. Process according to any of claims 1 to 9, in which the concentration of actinides An$^1$ and An$^2$ in each of the solutions is from 0.1 to 100 g.1$^{-1}$.

11. Process according to any of claims 1 to 10, in which the ratio of the concentration of complexing agent to the concentration of each of the actinides An$^1$ and An$^2$ is from 1 to 60, and preferably from 1 to 20.

12. Process according to any of claims 1 to 11, in which said first and second solutions are mixed in a proportion that corresponds to the respective proportions of the two actinides An$^1$/An$^2$ in a mixed oxide capable of being prepared by calcination from the coprecipitate.

13. Process according to any of claims 1 to 12, in which the process is carried out at a temperature between 0°C and boiling point.

14. Process according to any of claims 1 to 13, in which the concentration of actinides in each solution is from 10$^{-3}$ M to 1 M, and preferably from 0.1 to 0.2 M.

**15.** Process according to any of claims 1 to 14, in which the ratio of the concentration of complexing agent to the total concentration of at least two actinides in the mixture is from 1 to 40, and preferably from 1 to 20, even more preferably from 1 to 5, or better still from 1 to 4.

**16.** Process according to any of claims 1 to 15, in which the actinide $An^1$ has an oxidation state (III) and the actinide $An^2$ has an oxidation state (VI).

**17.** Process according to any of claims 1 to 16, in which the coprecipitation or simultaneous precipitation is carried out by addition to the mixture of an ammonium and/or a quaternary ammonium salt $NR_4^+$, where R is an alkyl group.

**18.** Process according to claim 17, in which said ammonium salt or quaternary ammonium salt, which is, preferably, a nitrate, is in solution in a water/ethanol medium.

**19.** Process according to any of claims 1 to 16, in which the coprecipitation or simultaneous precipitation is carried out by acidification of the mixture.

**20.** Process according to any of claims 1 to 19, in which $An^1$ is Pu and $An^2$ is U.

**21.** Process for preparing mixed oxides of actinides $An^1$ and $An^2$, in which one coprecipitates said actinides in oxidation state (IV) by the process according to any of claims 1 to 20, then one carries out the calcination of the resulting precipitate.

**22.** Process according to claim 21, in which the calcination is carried out under an inert or neutral atmosphere, at a temperature equal to or greater than 650°C and for a time greater than or equal to 1 hour.